# EUROPEAN PATENT APPLICATION

(11) **EP 3 511 544 A1**
(43) Date of publication of application: **17.07.2019**
(21) Application number: 19151290.4
(22) Date of filing: 10.01.2019
(51) Int. Cl.: F02B 37/18, F02B 37/24, F01P 1/08, F02B 39/16

(54) **AIR COOLED ELECTRONIC TURBO ACTUATOR**

(30) Priority: 15.01.2018 US 201815871473
(71) Applicant: Borgwarner Inc., Auburn Hills, Michigan 48326 (US)
(72) Inventor: HANDLON, Brian E., Arden, NC North Carolina 28704 (US); ZAGONE, John R., Hendersonville, NC North Carolina 48791 (US); GARRARD, Tyler R., Arden, NC North Carolina 48704 (US)
(74) Representative: Peterreins Schley

(57) **Abstract**

A number of variations may include a product comprising an engine having an intake manifold and an exhaust manifold; a turbocharger having a compressor operatively attached to a turbine, wherein the compressor is in fluid communication with the intake manifold through a first conduit and the turbine is in fluid communication with the exhaust manifold through a second conduit; an actuator in operative communication with one of a vane pack or a wastegate; a charge air cooler disposed within the first conduit; a first air filter in fluid communication with the compressor through a third conduit; a mass air flow sensor disposed within the third conduit; and an actuator cooling system operatively attached to an interior of the actuator to deliver an air flow to the interior of the actuator to cool the actuator.

## Description

### TECHNICAL FIELD

The field to which the disclosure generally relates to includes turbochargers.

### BACKGROUND

A turbocharger may include an actuator which may actuate a wastegate valve or vanes of a vane pack.

### SUMMARY OF ILLUSTRATIVE VARIATIONS

A number of variations may include a product comprising: an engine having an intake manifold and an exhaust manifold; a turbocharger having a compressor operatively attached to a turbine, wherein the compressor is in fluid communication with the intake manifold through a first conduit and the turbine is in fluid communication with the exhaust manifold through a second conduit; an actuator in operative communication with one of a vane pack or a wastegate; a charge air cooler disposed within the first conduit; a first air filter in fluid communication with the compressor through a third conduit; a mass air flow sensor disposed within the third conduit; and an actuator cooling system operatively attached to an interior of the actuator to deliver an air flow to the interior of the actuator to cool the actuator.

A number of variations may include a method for cooling a turbocharger actuator comprising: providing an engine comprising an intake manifold and an exhaust manifold, a turbocharger comprising a compressor operatively attached to a turbine, wherein the compressor is in fluid communication with the intake manifold through a first conduit and the turbine is in fluid communication with the exhaust manifold through a second conduit, and an actuator in operative communication with one of a vane pack or a wastegate, a charge air cooler disposed within the first conduit, a first air filter in fluid communication with the compressor through a third conduit, a mass air flow sensor disposed within the third conduit; and an actuator cooling system operatively attached to an interior of the actuator; and directing an air flow from the actuator cooling system to the interior of the actuator to cool the actuator.

A number of variations may include a method for cooling a variable turbine geometry turbocharger actuator comprising flowing air from an engine intake air system through at least one internal cavity within the variable turbine geometry turbocharger actuator.

Other illustrative variations within the scope of the invention will become apparent from the detailed description provided hereinafter. It should be understood that the detailed description and specific examples, while disclosing variations within the scope of the invention, are intended for purposes of illustration only and are not intended to limit the scope of the invention.

### BRIEF DESCRIPTION OF THE DRAWINGS

Select examples of variations within the scope of the invention will become more fully understood from the detailed description and the accompanying drawings, wherein:
FIG. 1 illustrates a combustion engine having a turbocharger actuator cooling system according to a number of variations.
FIG. 2 illustrates a combustion engine having a turbocharger actuator cooling system according to a number of variations.
FIG. 3 illustrates a combustion engine having a turbocharger actuator cooling system according to a number of variations.
FIG. 4 illustrates a combustion engine having a turbocharger actuator cooling system according to a number of variations.
FIG. 5 illustrates a combustion engine having a turbocharger actuator cooling system according to a number of variations.
FIG. 6 illustrates a combustion engine having a turbocharger actuator cooling system according to a number of variations.
FIG. 7 illustrates a combustion engine having a turbocharger actuator cooling system according to a number of variations.
FIG. 8 illustrates a combustion engine having a turbocharger actuator cooling system according to a number of variations.

### DETAILED DESCRIPTION OF ILLUSTRATIVE VARIATIONS

The following description of the variations is merely illustrative in nature and is in no way intended to limit the scope of the invention, its application, or uses.

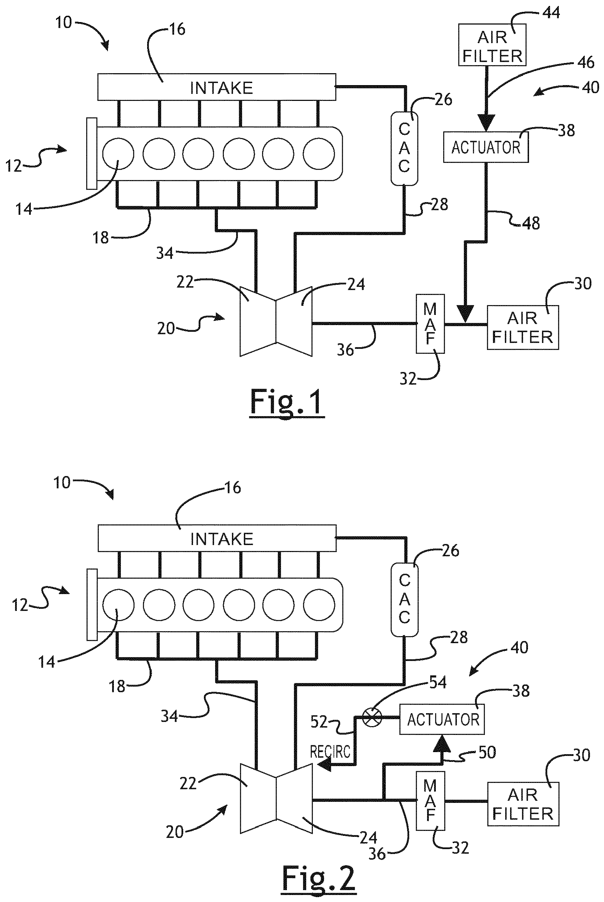

Referring to FIGS. 1-8, in a number of variations, an engine system 10 may include an engine 12 which may include one or more cylinders 14 which may receive intake air through an intake manifold 16 and which may exhaust air through an exhaust manifold 18. The engine system 10 may further include a turbocharger 20. The turbocharger 20 may comprise a turbine 22 operatively attached to a compressor 24 via a shaft (not illustrated). The compressor 24 may be in fluid communication with the intake manifold 16 through a first conduit 28 and the turbine 22 may be in fluid communication with the exhaust manifold 18 through a second conduit 34. A charge air cooler 26 may be within the first conduit 28 and may in fluid communication with the intake manifold 16 and the compressor 24. An air filter 30 may be in fluid communication with the compressor 24 through a third conduit 36 and may receive ambient air from outside of the vehicle to be delivered to the compressor 24. A mass air flow sensor 32 may be positioned within the flow path between the air filter 30 and the compressor 24 in the third conduit 36.

In a number of variations, the turbocharger 20 may include an actuator 38 which may be operatively attached to the turbocharger 20 to actuate a wastegate or a vane pack (not illustrated) which may be adjacent the inlet of the turbine 22. Any number of actuators 38 may be used including, but not limited to, electric, electro-mechanical, or pneumatic actuators. In a number of variations, the actuator 38 may have high temperature limits that may be exceeded by the engine environment. In a number of variations, an actuator cooling system 40 may be used to deliver air through a closed or semi closed loop within the actuator 38 to cool the internal components of the actuator 38. The closed or semi closed flow path may comprise one or more cooling passages 42 within the actuator 38 which may receive air from the actuator cooling system 40, a variation of which is illustrated in FIG. 9. In a number of variations, the turbocharger actuator cooling system 40 may extend the life of the actuator 38 and may reduce the costs of cooling the actuator 38.

Referring to FIG. 1, in a number of variations, a flow path for a variable turbine geometry (VTG) turbocharger actuator cooling system 40 may comprise a second air filter 44 which may be in fluid communication with the interior of the actuator 38 through a fourth conduit 46. The second air filter 44 may receive ambient air from outside of the vehicle and may deliver the air to the interior of the actuator 38 through the fourth conduit 46. The air flow from within the actuator 38 may then be delivered to the air flow within the third conduit 36 between the first air filter 30 and the mass air flow sensor 32 through a fifth conduit 48.

Referring to FIG. 2, in a number of variations, a flow path for a VTG turbocharger actuator cooling system 40 may comprise diverting air flow from the third conduit 36 between the mass air flow sensor 32 and the compressor 24 to the interior of the actuator 38 through a sixth conduit 50. The air flow from within the actuator 38 may then be recirculated back to the compressor 24 through a seventh conduit 52. In a number of variations, a directional check valve 54 may be positioned within the seventh conduit 52 and may be used to allow the air flow coming from the interior of the actuator 38 to be recirculated back to the compressor 24.

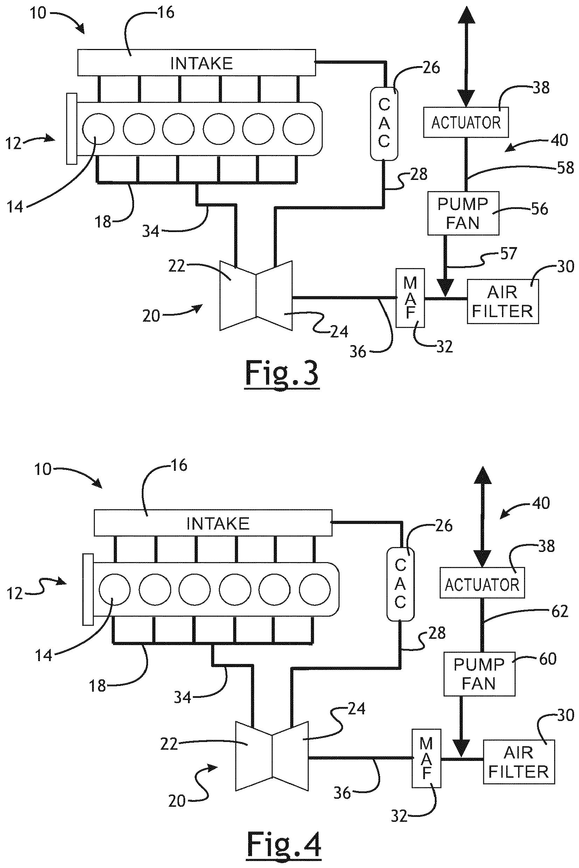

Referring to FIG. 3, in a number of variations, a flow path for a VTG turbocharger actuator cooling system 40 may comprise a pump or a fan 56 which may divert air flow from the third conduit 36 between the air filter 30 and the mass air flow sensor 32 through an eighth conduit 57, and may deliver the air flow into the interior of the actuator 38 through a ninth conduit 58. The air flow from within the interior of the actuator 38 may then be delivered out of the engine system 10.

Referring to FIG. 4, in a number of variations, a flow path for a VTG turbocharger cooling system or a wastegate turbocharger cooling system 40 may comprise a pump or fan 60 which may receive ambient air from outside of the vehicle and may deliver it to the interior of the actuator 38 through a tenth conduit 62. The air flow from within the interior of the actuator 38 may then be delivered out of the engine system 10.

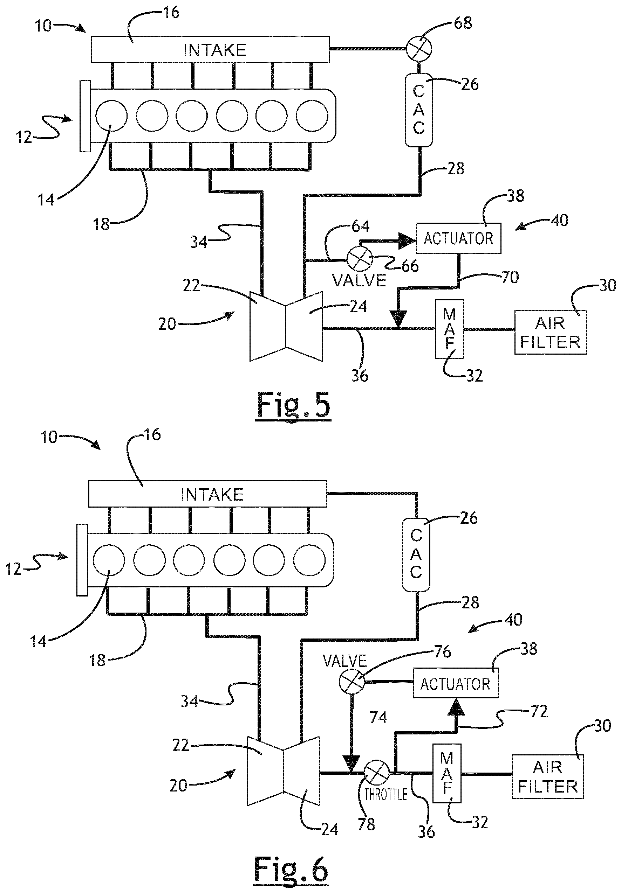

Referring to FIG. 5, in a number of variations, a flow path for a VTG turbocharger cooling system or a wastegate turbocharger cooling system 40 may comprise diverting air flow from the first conduit 28 between the compressor 24 and the charge air cooler 26 into the interior of the actuator 38 through an eleventh conduit 64. The air flow from within the interior of the actuator 38 may then be recirculated back into the flow path through the third conduit 36 between the mass air flow sensor 32 and the compressor 24 through a twelfth conduit 70. In a number of variations, a valve 66 may be positioned within the eleventh conduit 64. In a number of variations, the valve 66 may be constructed and arranged to open and close to selectively send air flow to the actuator 38. The valve 66 may be controlled in a number of variations including, but not limited to, an electronic control unit based on pressure or temperature. In a number of variations, a throttle valve 68 may be positioned within the first conduit 28 between the charge air cooler 26 and the intake manifold 16 and may control the amount of air flow to the intake manifold 16.

Referring to FIG. 6, in a number of variations, a flow path for a VTG turbocharger cooling system 40 may comprise diverting air flow from the third conduit 36 between the mass air flow sensor 32 and the compressor 24 into the interior of the actuator 38 through a thirteenth conduit 72. The air flow from within the interior of the actuator 38 may then be recirculated back into the flow path within the third conduit 36 between the mass air flow sensor 32 and the compressor 24 through a fourteenth conduit 74. In a number of variations, a check valve 76 may be positioned within the fourteenth conduit 74 to control the air flow from the actuator 38 to be recirculated back to the third conduit 36. In another variation, the check valve 76 may be positioned within the thirteenth conduit 72 (not illustrated). In a number of variations, a throttle valve 78 may be located within the third conduit 36 between the mass air flow sensor 32 and the compressor 24 and may control the amount of air flow into the compressor 24.

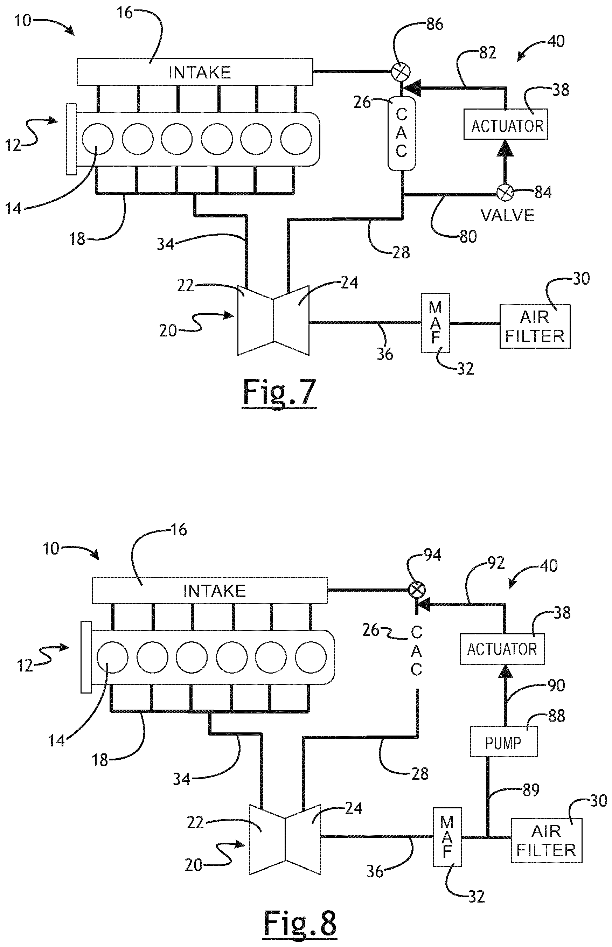

Referring to FIG. 7, in a number of variations, a flow path for a VTG turbocharger cooling system or a wastegate turbocharger cooling system 40 may comprise diverting air flow from the first conduit 28 between the compressor 24 and the charge air cooler 26 into the interior of the actuator 38 through a fifteenth conduit 80. The air flow from within the actuator 38 may then be recirculated back to the air flow within the first conduit 28 between the charge air cooler 26 and the intake manifold 16 through a sixteenth conduit 82. In a number of variations, a valve 84 may be positioned within the fifteenth conduit 80 between the compressor 24 and the charge air cooler 26. The valve 84 may be controlled in a number of variations including, but not limited to, an electronic control unit based on pressure or based on temperature. In a number of variations, a throttle valve 86 may be positioned within the first conduit 28 between the charge air cooler 26 and the intake manifold 16 and may be used to control the amount of air flow to the intake manifold 16.

Referring to FIG. 8, in a number of variations, a flow path for a VTG turbocharger cooling system 40 may comprise a pump or a fan 88 which may divert air flow from the third conduit 36 between the air filter 30 and the mass air flow sensor 32 through a seventeenth conduit 89 and into the interior of the actuator 38 through an eighteenth conduit 90. The air flow from within the actuator 38 may then be directed to the first conduit 28 between the charge air cooler 26 and the intake manifold 16 through a nineteenth conduit 92. In a number of variations, a throttle valve 94 may be positioned within the first conduit 28 between the charge air cooler 26 and the intake manifold 16 and may be used to control the amount of air flow to the intake manifold 16.

The following description of variants is only illustrative of components, elements, acts, product and methods considered to be within the scope of the invention and are not in any way intended to limit such scope by what is specifically disclosed or not expressly set forth. The components, elements, acts, product and methods as described herein may be combined and rearranged other than as expressly described herein and still are considered to be within the scope of the invention.

Variation 1 may include a product comprising: an engine having an intake manifold and an exhaust manifold; a turbocharger having a compressor operatively attached to a turbine, wherein the compressor is in fluid communication with the intake manifold through a first conduit and the turbine is in fluid communication with the exhaust manifold through a second conduit; an actuator in operative communication with one of a vane pack or a wastegate; a charge air cooler disposed within the first conduit; a first air filter in fluid communication with the compressor through a third conduit; a mass air flow sensor disposed within the third conduit; and an actuator cooling system operatively attached to an interior of the actuator to deliver an air flow to the interior of the actuator to cool the actuator.

Variation 2 may include a product as set forth in Variation 1 wherein the actuator cooling system comprises a fourth conduit in operative communication with a second air filter and the actuator, and a fifth conduit in operative communication with the actuator and the third conduit between the mass air flow sensor and the first air filter.

Variation 3 may include a product as set forth in Variation 1 wherein the actuator cooling system comprises a fourth conduit in operative communication with the actuator and the third conduit between the compressor and the mass air flow sensor, and a fifth conduit in operative communication with the actuator and the compressor.

Variation 4 may include a product as set forth in Variation 1 wherein the actuator cooling system comprises a fourth conduit in operative communication with at least one of a fan or a pump and the third conduit between the mass air flow sensor and the first air filter, and a fifth conduit in operative communication with one of the pump or the fan and the actuator.

Variation 5 may include a product as set forth in Variation 1 wherein the actuator cooling system comprises a fourth conduit in operative communication with at least one of a pump or a fan and the actuator.

Variation 6 may include a product as set forth in Variation 1 wherein the actuator cooling system comprises a fourth conduit in operative communication with the actuator and the first conduit between the compressor and the charge air cooler, and a fifth conduit in operative communication with the actuator and the third conduit between the compressor and the mass air flow sensor.

Variation 7 may include a product as set forth in Variation 1 wherein the actuator cooling system comprises a fourth conduit in operative communication with the actuator and the third conduit between the compressor and the mass air flow sensor, and a fifth conduit in operative communication with the actuator and the third conduit between the compressor and the mass air flow sensor.

Variation 8 may include a product as set forth in Variation 1 wherein the actuator cooling system comprises a fourth conduit in operative communication with the actuator and the first conduit between the compressor and the charge air cooler, and a fifth conduit in operative communication with the actuator and the first conduit between the charge air cooler and the intake manifold.

Variation 9 may include a product as set forth in Variation 1 wherein the actuator cooling system comprises a fourth conduit in operative communication with one of a pump or a fan and the third conduit between the mass air flow sensor and the first air filter, a fifth conduit in operative communication with one of the pump or the fan and the actuator, and a sixth conduit in operative communication with the actuator and the first conduit between the charge air cooler and the intake manifold.

Variation 10 may include a method for cooling a turbocharger actuator comprising: providing an engine comprising an intake manifold and an exhaust manifold, a turbocharger comprising a compressor operatively attached to a turbine, wherein the compressor is in fluid communication with the intake manifold through a first conduit and the turbine is in fluid communication with the exhaust manifold through a second conduit, and an actuator in operative communication with one of a vane pack or a wastegate, a charge air cooler disposed within the first conduit, a first air filter in fluid communication with the compressor through a third conduit, a mass air flow sensor disposed within the third conduit; and an actuator cooling system operatively attached to an interior of the actuator; and directing an air flow from the actuator cooling system to the interior of the actuator to cool the actuator.

Variation 11 may include a method as set forth in Variation 10 wherein directing the air flow from the actuator cooling system to the interior of the actuator comprises delivering the air flow from a second air filter to the actuator and further comprises delivering the air flow from the actuator to the third conduit between the mass air flow sensor and the first air filter.

Variation 12 may include a method as set forth in Variation 10 wherein directing the air flow from the actuator cooling system to the interior of the actuator comprises diverting the air flow from the third conduit between the compressor and the mass air flow sensor and recirculating the air flow back into the compressor.

Variation 13 may include a method as set forth in Variation 10 wherein directing the air flow from the actuator cooling system to the interior of the actuator comprises diverting the air flow from the third conduit between the mass air flow sensor and the first air filter and sending it to one of a fan or a pump and to the actuator.

Variation 14 may include a method as set forth in Variation 10 wherein directing the air flow from the actuator cooling system to the interior of the actuator comprises delivering the air flow from one of a pump or a fan to the actuator.

Variation 15 may include a method as set forth in Variation 10 wherein directing the air flow from the actuator cooling system to the interior of the actuator comprises diverting the air flow from the first conduit between the compressor and the charge air cooler to the actuator and recirculating the air flow back into the third conduit between the mass air flow sensor and the compressor.

Variation 16 may include a method as set forth in Variation 10 wherein directing the air flow from the actuator cooling system to the interior of the actuator comprises diverting the air flow from the third conduit between the mass air flow sensor and the compressor to the actuator and recirculating the air flow back into the third conduit between the compressor and the mass air flow sensor.

Variation 17 may include a method as set forth in Variation 10 wherein directing the air flow from the actuator cooling system to the interior of the actuator comprises diverting the air flow from the first conduit between the compressor and the charge air cooler to the actuator and recirculating the air flow back into the first conduit between the charge air cooler and the intake manifold.

Variation 18 may include a method as set forth in Variation 10 wherein directing the air flow from the actuator cooling system to the interior of the actuator comprises diverting the air flow from the third conduit between the first air filter and the mass air flow sensor to one of a pump or a fan and to the actuator and delivering the air flow from the actuator to the first conduit between the charge air cooler and the intake manifold.

Variation 19 may include a method for cooling a variable turbine geometry turbocharger actuator comprising flowing air from an engine intake air system through at least one internal cavity within the variable turbine geometry turbocharger actuator.

The above description of select variations within the scope of the invention is merely illustrative in nature and, thus, variations or variants thereof are not to be regarded as a departure from the spirit and scope of the invention.

## Claims

1. A product comprising:
an engine having an intake manifold and an exhaust manifold;
a turbocharger having a compressor operatively attached to a turbine, wherein the compressor is in fluid communication with the intake manifold through a first conduit and the turbine is in fluid communication with the exhaust manifold through a second conduit;
an actuator in operative communication with one of a vane pack or a wastegate;
a charge air cooler disposed within the first conduit;
a first air filter in fluid communication with the compressor through a third conduit;
a mass air flow sensor disposed within the third conduit; and
an actuator cooling system operatively attached to an interior of the actuator to deliver an air flow to the interior of the actuator to cool the actuator.

2. The product of claim 1 wherein the actuator cooling system comprises a fourth conduit in operative communication with a second air filter and the actuator, and a fifth conduit in operative communication with the actuator and the third conduit between the mass air flow sensor and the first air filter.

3. The product of claim 1 wherein the actuator cooling system comprises a fourth conduit in operative communication with the actuator and the third conduit between the compressor and the mass air flow sensor, and a fifth conduit in operative communication with the actuator and the compressor.

4. The product of claim 1 wherein the actuator cooling system comprises a fourth conduit in operative communication with at least one of a fan or a pump and the third conduit between the mass air flow sensor and the first air filter, and a fifth conduit in operative communication with one of the pump or the fan and the actuator.

5. The product of claim 1 wherein the actuator cooling system comprises a fourth conduit in operative communication with at least one of a pump or a fan and the actuator.

6. The product of claim 1 wherein the actuator cooling system comprises a fourth conduit in operative communication with the actuator and the first conduit between the compressor and the charge air cooler, and a fifth conduit in operative communication with the actuator and the third conduit between the compressor and the mass air flow sensor.

7. The product of claim 1 wherein the actuator cooling system comprises a fourth conduit in operative communication with the actuator and the third conduit between the compressor and the mass air flow sensor, and a fifth conduit in operative communication with the actuator and the third conduit between the compressor and the mass air flow sensor.

8. The product of claim 1 wherein the actuator cooling system comprises a fourth conduit in operative communication with the actuator and the first conduit between the compressor and the charge air cooler, and a fifth conduit in operative communication with the actuator and the first conduit between the charge air cooler and the intake manifold.

9. The product of claim 1 wherein the actuator cooling system comprises a fourth conduit in operative communication with one of a pump or a fan and the third conduit between the mass air flow sensor and the first air filter, a fifth conduit in operative communication with one of the pump or the fan and the actuator, and a sixth conduit in operative communication with the actuator and the first conduit between the charge air cooler and the intake manifold.

10. A method for cooling a turbocharger actuator comprising:
providing an engine comprising an intake manifold and an exhaust manifold, a turbocharger comprising a compressor operatively attached to a turbine, wherein the compressor is in fluid communication with the intake manifold through a first conduit and the turbine is in fluid communication with the exhaust manifold through a second conduit, and an actuator in operative communication with one of a vane pack or a wastegate, a charge air cooler disposed within the first conduit, a first air filter in fluid communication with the compressor through a third conduit, a mass air flow sensor disposed within the third conduit; and an actuator cooling system operatively attached to an interior of the actuator; and
directing an air flow from the actuator cooling system to the interior of the actuator to cool the actuator.

11. The method of claim 10 wherein directing the air flow from the actuator cooling system to the interior of the actuator comprises delivering the air flow from a second air filter to the actuator and further comprises delivering the air flow from the actuator to the third conduit between the mass air flow sensor and the first air filter.

12. The method of claim 10 wherein directing the air flow from the actuator cooling system to the interior of the actuator comprises diverting the air flow from the third conduit between the compressor and the mass air flow sensor and recirculating the air flow back into the compressor.

13. The method of claim 10 wherein directing the air flow from the actuator cooling system to the interior of the actuator comprises diverting the air flow from the third conduit between the mass air flow sensor and the first air filter and sending it to one of a fan or a pump and to the actuator.

14. The method of claim 10 wherein directing the air flow from the actuator cooling system to the interior of the actuator comprises delivering the air flow from one of a pump or a fan to the actuator.

15. The method of claim 10 wherein directing the air flow from the actuator cooling system to the interior of the actuator comprises diverting the air flow from the first conduit between the compressor and the charge air cooler to the actuator and recirculating the air flow back into the third conduit between the mass air flow sensor and the compressor.

16. The method of claim 10 wherein directing the air flow from the actuator cooling system to the interior of the actuator comprises diverting the air flow from the third conduit between the mass air flow sensor and the compressor to the actuator and recirculating the air flow back into the third conduit between the compressor and the mass air flow sensor.

17. The method of claim 10 wherein directing the air flow from the actuator cooling system to the interior of the actuator comprises diverting the air flow from the first conduit between the compressor and the charge air cooler to the actuator and recirculating the air flow back into the first conduit between the charge air cooler and the intake manifold.

18. The method of claim 10 wherein directing the air flow from the actuator cooling system to the interior of the actuator comprises diverting the air flow from the third conduit between the first air filter and the mass air flow sensor to one of a pump or a fan and to the actuator and delivering the air flow from the actuator to the first conduit between the charge air cooler and the intake manifold.

19. A method for cooling a variable turbine geometry turbocharger actuator comprising flowing air from an engine intake air system through at least one internal cavity within the variable turbine geometry turbocharger actuator.
